# EUROPEAN PATENT SPECIFICATION

(11) **EP 0 683 299 B1**
(45) Date of publication and mention of the grant of the patent: **23.05.2001**
(21) Application number: 94120881.1
(22) Date of filing: 29.12.1994
(51) Int. Cl.: E06B 3/86, E06B 5/18, E04B 1/92, E04C 2/296

(54) **Antistatic structural element of reinforced plastic**
Antistatisches Strukturelement aus einem Faserverstärkten Kunststoff
Elément de structure antistatique en matière plastique renforcée

(30) Priority: 03.01.1994 FI 9410
(43) Date of publication of application: 22.11.1995
(73) Proprietor: Muovilami Oy, FIN-63700 Ähtäri (FI)
(72) Inventor: Aho, Esko, SF-63700 Ähtäri (FI)
(74) Representative: Risku, Ira Marjatta

(56) References cited:
- FR-A- 2 594 882
- GB-A- 2 031 924
- US-A- 4 676 041
- US-A- 4 758 686
- US-A- 4 889 750
- DATABASE WPI Week 9539 Derwent Publications Ltd., London, GB; AN 95-295078 XP002019607 & JP-A-07 179 792 (SEKISUI CHEM IND CO LTD)

## Description

The invention relates to a structural element of reinforced plastic, such as a door or a wall panel, which has been treated to remove static electricity.

Doors and elements of reinforced plastic have been being prepared already for a long time. A polyester sheet reinforced with glass fibre is often used as the fabrication material for the casing and some porous material, such as polyurethane, in the core part, which gives the element the required rigidity. These kinds of doors and elements can be used in damp and sanitary spaces, cold rooms, hospital applications, and the pharmaceutical and electronical industries.

In the following the invention is described mainly for door applications, because the same properties pertaining to doors apply generally to other structural elements.

The most common problem with a door of reinforced plastic, such as a door of glass fibre polyester, is the formation of static electricity on its surface. This sets restrictions of use e.g. in the clean spaces of the electronical industry and in spaces where electrical fields are not allowed (e.g. so-called Faraday cages). The most significant of the drawbacks caused by static electricity are the gathering of dust, the danger of sparks and the disturbances in delicate instruments and microcircuits.

In spaces where the static electricity forms a significant disturbance factor metal doors are usually used. Metal doors are, however, heavy and become easily dented. Due to their structure, metal doors are not completely sealed, so water and bacteria can get into them. To lighten a metal door veneer or melamine laminate is usually used combined with a wooden frame structure. Due to the nature of wood it may, however, warp the door and sensitise the metal door to microbes and moisture.

The aim of the present invention is to solve the above-mentioned problems. The rigid structure according to the invention makes the door non-warping, light, strong and impact resistant.

The essential characteristics of the invention have been presented in the enclosed patent claims.

By means of the present invention the problem of a door becoming statically charged is solved by providing an electrical contact with the earth i.e. an earth route from each point of the door. This is achieved by coating the element of reinforced plastic with an electrically conductive plastic material. There are previously known numerous electrically conductive plastic materials, which can all be used for this aim of the invention provided they form a sufficiently hard and clean surface. One preferred coating is the so-called gel coat coating which consists of unsaturated polyester.

The GB-A-2 031 924 describes a fibre reinforced plastic tank having a gel coat coating. In this document gel coat alone is not considered to be efficient enough for dissipating static electrical charges, and thus the gel coat is mixed with a plastic material into which graphite has been incorporated. In another solution, between the gel coat and the article there has been provided plastic material with graphite. However, in this document the article has not been provided with an earthing route discharging static electrical charges from the surface of the element to a desired earthing point. The inventors of the present application have noticed that the conductivity of the surface is not sufficient to dissipate the electric charges if a functioning earthing route has not been provided.

The US-A-4 676 041 describes a door in which the shell consists of reinforced plastic. The door is corrosion-resistant, but not conductive. The electric conductivity from the door to the earthing point must be arranged, it is not an inbuilt feature of a door. This document does not recognise the problem of the present invention, i.e. the gathering of static electricity on the surface of the door.

The appearance of fibre glass-enforced plastic (FRP) products is greatly enhanced when a coloured polyester gel coat containing pigments and thixotropic modifiers is incorporated. These gel coats, which have a film thickness of about 375 µm, are applied directly to the treated mould surface, usually by spraying. The gel coat is allowed to cure over about 2 h.

The thixotropic characteristics of gel coats need to be precisely controlled because of the thickness of the deposited film and the tendency of such films to sag. Gel coat formulations also contain accelerators, and therefore attention must be paid to gel-time drift. Extension in gel time can impair the cure of the gel coat in the allotted time, and subsequent application of the resin laminate causes the gel coat to swell and wrinkle.

Resin and glass fibre reinforcement is applied directly over the gel coat by hand-lay-up or spray-up techniques in order to produce a plastic in which the coloured coating is an integral part of the composite. The surface of the gel coat retains a glossy appearance and it does not erode to expose glass fibres as in non coated FRP products, because the gel coat contains no glass fibre reinforcement. The main outlets for gel-coated FRP products have been the boat and bathtub markets.

If the surface area of the element to be coated is large compared with the electrical conductivity of the coating, it is worth while to draw metal conductors (e.g. a thin copper thread) across the coating field to the earth point. The thread does not spoil the appearance of the product if it is placed deep enough in the coating or in the border of the reinforced plastic of the casing and the electrically conductive coating.

To make sure that the element according to the invention is antistatic an electrical contact with earth must be provided. It is easy to laminate an earth conductor into an immobile element, this conductor is then connected to the earth points of the building. The method of ensuring good conductivity to the fastening point of the earth conductor, when using a door hinge, is shown below:

In the following the invention is described in more detail referring to the figures, in which
fig. 1 depicts a cross-section of a structure of reinforced plastic according to the invention;
fig. 2 depicts a hinge fastening ensuring the antistatic state of the door of reinforced plastic according to the invention.

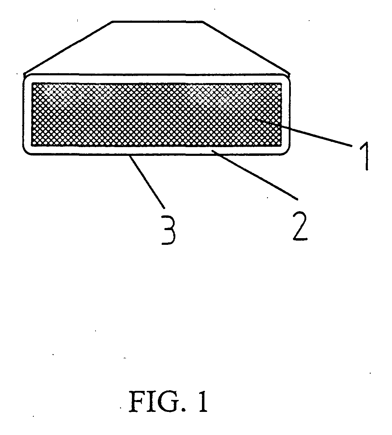

Fig. 1 shows a door structure of reinforced plastic, which is of the Sandwich-type, and the core part 1, which is surrounded by a coating of reinforced plastic laminate 2 having the thickness of about 2.5mm. The core part 1 can be, for example, freon-free polyurethane. The layer of reinforced plastic 2 also seamlessly encases the edges of the door, whereby the door sheet becomes tight and does not let water or moisture through it. Polyester reinforced with glass fibre, for example, can be used as the layer of reinforced plastic.

The surface of the door element has been coated with a hard and smooth, electrically conductive plastic coating 3 having the thickness of 0.5mm. The coating can be, for example, gel coat material. A suitable coating is, for example, the coating known by the trade name Neste Elektra GE 7500 H, the specific resistance of which is below 50kOhm (ASTM 257).

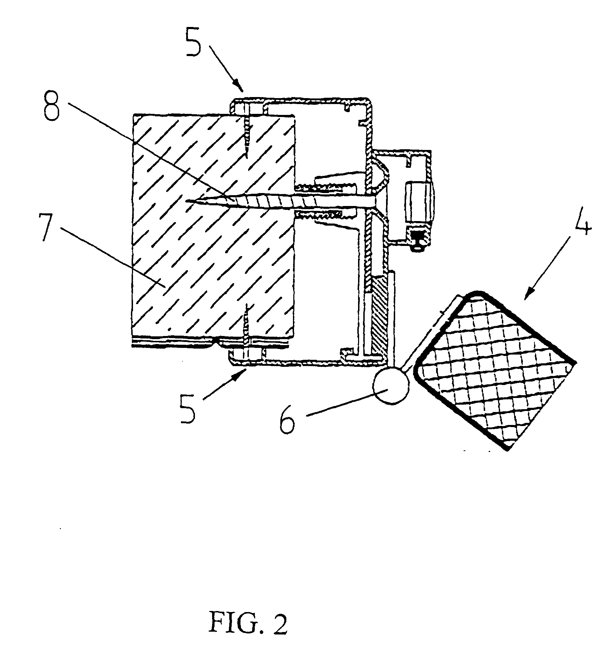

Fig. 2 shows the hinge fastening of the reinforced plastic door according to the invention, to the frame so as to ensure the antistatic state of the door. As to the electrical conductivity the hinges act in the same manner independent of the type. Here, an earthing through a lifting hinge has been shown. To achieve a sufficient electrical conductivity from the door 4 to the hinge, the fastening points 5 of the hinge (the fastening points of the screws) with their surroundings are prepared by using electrically conductive reinforcement e.g. a mat of carbon fibre. Another alternative to ensure the electrical conductivity from the door to the frame is to form an electrical bridge by means of conductor elements between the hinge body 6 and the door 1. For the conductor elements, for example, a conductive mat or carbon fibre, can be used, or aluminium powder mixed in the reinforced plastic on the point of the hinge, or thin strips of copper thread, etc.

As the hinge consists completely of metal, the earth flow is conducted to the frame 7 of the door. Inside the frame 7 a fastening and earthing bar 8 of aluminium has been placed, which is in contact with the earthing system of the building. Also metal frames can be used for earthing a door.

A door structure according to the invention can be prepared, for example, in the following manner. To the door frames is sprayed an electrically conductive, unsaturated polyester gel coat coating, which is cured with 1.5% MEK peroxide. When the gel coat coating has cured and become tacky dry, the conductor elements, e.g. the copper foil, the carbon fibre mat, etc. which ensure the conductivity, are placed into both mould halves at the points of the hinges and the lock. After this both mould halves are loaded with layers of glass fibre mat and unsaturated polyester, to which about 1.2% of curing agent has been added. A desired number of glass fibre layers are put into both mould halves.

To one mould half the material of the core part of the door, to which the necessary fastening pieces of the fittings have been attached, is set on the glass fibre polyester layer. The mould is closed and moved to a flatbed press, in which the press power is raised to 72 tons in sequences of 10 sec. When the polyester has cured the mould is taken out from the press and opened. The ridges are cut away from the ready door blank and the door is finished and furnished with hinges, locks, and other fittings.

## Claims

1. A structural element comprising a core part (1) surrounded by a casing (2) made of reinforced plastic having a layer (3) of electrically conductive plastic material on its surface, **characterised** in that the element further comprises an earthing route for discharging static electrical charges from the surface of the element to a desired earthing point.

2. A structural element of claim 1, **characterised** in that the earthing route runs from the surface of the element through a hinge or other metal conductor part to the body of a building.

3. A structural element of claim 1 or 2, **characterised** in that a metal conductive material is placed across the surface of the element in connection to the earthing point.

4. A structural element of claim 1, 2 or 3, **characterised** in that the casing consists of polyester reinforced by glass fibre.

5. A structural element of any of the preceding claims, **characterised** in that the electrically conductive layer is a gel coat coating.

6. A structural element of any of the preceding claims, **characterised** in that the element is a door.

## Patentansprüche

1. Konstruktionselement bestehend aus einem Kernteil (1), das von einer Ummantelung (2) umgeben ist, die aus faserverstärktem Kunststoff besteht, der auf seiner Oberfläche eine Schicht (3) aus elektrisch leitfähigem Kunststoffmaterial aufweist, dadurch gekennzeichnet, dass das Element weiter einen Erdungsleitweg zum Ableiten von statisch elektrischen Ladungen von der Oberfläche des Elements nach einem gewünschten Erdungspunkt aufweist.

2. Konstruktionselement nach Anspruch 1, dadurch gekennzeichnet, dass der Erdungsleitweg von der Oberfläche des Elements durch ein Gelenk oder ein anderes Metallleiterteil zum Körper eines Gebäudes läuft.

3. Konstruktionselement nach Anspruch 1 oder 2, dadurch gekennzeichnet, dass ein leitender Werkstoff aus Metall quer über die Oberfläche des Elements angebracht ist, wobei er mit dem Erdungspunkt verbunden ist.

4. Konstruktionselement nach Anspruch 1, 2 oder 3, dadurch gekennzeichnet, dass die Ummantelung aus glasfaserverstärktem Polyester besteht.

5. Konstruktionselement nach einem der vorherigen Ansprüche, dadurch gekennzeichnet, dass die elektrisch leitende Schicht aus einem gelartigen Überzug besteht.

6. Konstruktionselement nach einem der vorherigen Ansprüche, dadurch gekennzeichnet, dass das Element eine Tür ist.

## Revendications

1. Elément de structure comprenant une partie centrale (1) entourée par une enveloppe (2) en matière plastique renforcée ayant sur sa surface une couche (3) de matière plastique électriquement conductrice, caractérisé en ce que l'élément comporte en outre un circuit de mise à la terre pour décharger des charges électriques statiques depuis la surface de l'élément jusqu'à un point de mise à la terre voulu.

2. Elément de structure selon la revendication 1, caractérisé en ce que le circuit de mise à la terre va de la surface de l'élément au corps d'un bâtiment en passant par une charnière ou autre pièce conductrice en métal.

3. Elément de structure selon la revendication 1 ou 2, caractérisé en ce qu'une matière conductrice métallique est placée en travers de la surface de l'élément, en connexion avec le point de mise à la terre.

4. Elément de structure selon la revendication 1, 2 ou 3, caractérisé en ce que l'enveloppe est en polyester renforcé par de la fibre de verre.

5. Elément de structure selon l'une quelconque des revendications précédentes, caractérisé en ce que la couche électriquement conductrice est un revêtement d'enduit gélifié.

6. Elément de structure selon l'une quelconque des revendications précédentes, caractérisé en ce que l'élément est une porte.
